# FASCICULE DE BREVET EUROPEEN

(11) **EP 2 291 296 B1**
(45) Date de publication et mention de la délivrance du brevet: **14.12.2011**
(21) Numéro de dépôt: 09745850.9
(22) Date de dépôt: 18.05.2009
(51) Int. Cl.: B60J 7/047, B60J 7/057, B60J 7/053

(54) **DISPOSITIF D'OBTURATION D'UNE BAIE MENAGEE DANS UN VEHICULE AUTOMOBILE, PAVILLON ET VEHICULE CORRESPONDANTS**
VORRICHTUNG ZUM VERSCHLIESSEN EINES IN EINEM KRAFTFAHRZEUG GEBILDETEN FENSTERS, ENTSPRECHENDES DACH UND ENTSPRECHENDES FAHRZEUG
DEVICE FOR CLOSING OFF A WINDOW MADE IN A MOTOR VEHICLE, CORRESPONDING ROOF AND CORRESPONDING VEHICLE

(30) Priorité: 16.05.2008 FR 0853210
(43) Date de publication de la demande: 09.03.2011
(73) Titulaire: Advanced Comfort Systems France SAS - ACS France, 79302 Bressuire Cedex (FR)
(72) Inventeur: FOUREL, Pascal, F-35400 Saint-malo (FR); SANDRIN, Xavier, F-79300 Bressuire (FR); BILLY, David, F-79300 Bressuire (FR)
(74) Mandataire: Bioret, Ludovic
(86) Numéro de dépôt international: PCT/EP2009/056022
(87) Numéro de publication internationale: WO 2009/138518

(56) Documents cités:
- EP-A- 1 279 537
- FR-A- 2 467 094
- GB-A- 2 131 871

## Description

### 1. Domaine de l'invention

Le domaine de l'invention est celui des baies de véhicules automobiles.

Plus précisément, l'invention concerne les dispositifs d'obturation d'une baie ménagée dans la carrosserie d'un véhicule comprenant une vitre mobile susceptible de libérer ou de fermer une ouverture dans la baie.

Dans le cadre de la présente demande, on entend par les termes « vitre », ou « panneau vitré » tout panneau (fixe ou mobile) substantiellement transparent ou translucide participant au clair de baie, réalisé en verre ou en tout matériau adapté, tel que le polyuréthane. Les bords du panneau peuvent être opacifiés, par exemple par sérigraphie. Dans certains modes de réalisation, le panneau peut être constitué de plusieurs éléments affleurants, vus de l'extérieur, et, le cas échéant, au moins un des ces éléments peut être opaque, et par exemple en métal.

Un dispositif selon l'invention peut équiper une baie du toit, ou pavillon, d'un véhicule ou toute autre baie formée dans une partie sensiblement horizontale de la carrosserie du véhicule. Elle peut également équiper une baie sensiblement verticale du véhicule.

### 2. Techniques de l'art antérieur

La tendance actuelle, en matière de véhicule automobile, qu'il s'agisse d'une automobile, d'un véhicule utilitaire, d'un camion, ou d'un autobus, est de proposer de plus en plus de surfaces vitrées. Ainsi, notamment, on a proposé des véhicules présentant un pavillon équipé d'un ou plusieurs éléments vitrés. Dans certains cas, l'intégralité du pavillon est en verre ou en un matériau similaire laissant passer les rayons du soleil.

De façon à augmenter le clair de baie, on a d'autre part cherché à proposer des surfaces vitrées de grande taille tout en minimisant le nombre de panneaux vitrés du pavillon. Par exemple, la lunette arrière ou le pare-brise peuvent se trouver dans le prolongement du pavillon vitré, pour assurer un aspect visuel de continuité (sans cadre ni montant de séparation visible et formant saillie, vue de l'extérieur, même si, en pratique, ils correspondent à des éléments vitrés distincts).

Il a également fallu tenir compte du fait que ces surfaces vitrées doivent s'intégrer dans les pavillons de véhicules actuels ou futurs qui présentent des formes fuyantes et sont généralement non plans et le plus souvent incurvés ou galbés dans le sens de la largeur et également, parfois, dans le sens de la longueur.

D'autre part, on a proposé des solutions pour dégager des ouvertures dans le pavillon, notamment pour pouvoir former un module de toit ouvrant.

Ainsi, une technique répandue pour libérer une ouverture dans le pavillon consiste à faire basculer une vitre mobile montée sur un cadre vers l'extérieur du véhicule autour d'un axe solidaire du plan du pavillon, pour libérer un passage entre la vitre et le cadre.

Cette technique présente l'inconvénient de ne permettre qu'un entrebaîllement de la vitre afin d'éviter son arrachement sous l'effet de la pression aérodynamique et de ne pouvoir généralement être mise en oeuvre que pour des vitres de petite taille.

Une autre technique de toit ouvrant également utilisée de façon classique consiste à rendre la vitre mobile au-dessus ou au-dessous du pavillon dans un plan sensiblement parallèle au plan du pavillon. On connaît ainsi une première technique de pavillon percé d'une baie pouvant être obturée par un panneau vitré coulissant logé dans la garniture du pavillon. Un inconvénient de cette technique est que les dimensions des ouvertures dans le pavillon, et consécutivement des surfaces vitrées permettant de les obturer, sont limitées.

Dans le cas où cette approche est mise en oeuvre pour des surfaces vitrées couvrant la largeur d'un pavillon, on a proposé de faire coulisser les bords latéraux de la vitre dans des rails de guidage disposés le long des longerons du pavillon.

On a également proposé, pour augmenter la surface d'ouverture dans le pavillon, de faire coulisser la vitre mobile au moins partiellement le long de la lunette arrière ou de faire pénétrer ou sortir la vitre mobile d'un logement spécifique situé, par exemple, dans la garniture du pavillon.

Cette technique présente cependant de nombreux inconvénients.

Ainsi, cette technique de guidage des bords latéraux de la vitre dans des rails impose que les bords latéraux du panneau vitré soient parallèles, ou en d'autres termes un guidage rectiligne, pour éviter des jours inesthétiques qui pourraient apparaître entre les bords latéraux de la vitre et le pavillon. Il en résulte de nombreuses adaptations pour solidariser la vitre coulissante à la carrosserie tout en suivant le profil longitudinal, généralement courbe, du pavillon. Des caches supplémentaires peuvent notamment être apposés pour dissimuler les moyens de guidage, d'actionnement et d'entraînement de la vitre, ce qui réduit la surface vitrée du pavillon.

Par ailleurs, les moyens de guidage, d'actionnement et d'entraînement de la vitre mobile sont lourds, encombrants et complexes à monter. Il est donc nécessaire de prévoir un volume de logement en conséquence, nuisant au volume disponible à l'intérieur du véhicule, si la vitre mobile coulisse à l'intérieur du véhicule. Ils ont de plus un coût de fabrication élevé et posent classiquement des problèmes d'étanchéité. Leur montage sur le véhicule et la maintenance sont également complexes. Ils présentent en outre des contraintes en termes d'ergonomie.

Un inconvénient encore plus critique de cette technique connue est qu'il faut prévoir un équilibrage des efforts exercés sur les bords latéraux du panneau coulissant horizontalement pour déplacer ce panneau, afin d'éviter qu'il ne se mette de travers lors de son déplacement et ne se bloque dans les rails, ce qui la rend complexe.

D'autre part, sur le plan esthétique, cette technique ne permet pas d'obtenir, vu de l'extérieur, un aspect lisse, affleurant avec la carrosserie, du fait du déport de la vitre mobile par rapport au plan du pavillon, accentué par la présence d'une structure de guidage de cette vitré avec des rails. Le document EP 1 279 537 A décrit un dispositif d'obturation d'un bien aménagée dans un véhicule automobile selon le préambule de la revendication 1.

### 3. Objectifs de l'invention

L'invention a notamment pour objectif de pallier les différents inconvénients de ces techniques connues.

Plus précisément, un objectif de l'invention est, au moins dans un mode de réalisation particulier, de fournir une technique d'obturation d'une baie horizontale ménagée dans la carrosserie d'un véhicule qui soit simple à mettre en oeuvre.

Un autre objectif de l'invention est, au moins dans un mode de réalisation particulier, de fournir une telle technique qui permette une ouverture maximisée et qui soit le plus possible affleurant avec la carrosserie du véhicule automobile de façon à d'améliorer le rendu esthétique de l'élément de carrosserie sur lequel il est monté tout en améliorant ses performances aérodynamiques.

En d'autres termes, un objectif de l'invention est, au moins dans un mode de réalisation particulier, de réduire ou supprimer sinon la présence, du moins l'impression visuelle de rupture que constitue la vitre mobile déportée, de manière qu'elle soit perçue comme une portion transparente ne présentant pas de discontinuité avec la carrosserie.

L'invention a également pour objectif, au moins dans un mode de réalisation particulier, de fournir une telle technique, augmentant le clair de baie.

Dans au moins un mode de réalisation particulier de l'invention, un objectif de l'invention est de fournir une telle technique, qui permette de simplifier la fabrication et le montage d'un pavillon sur une baie de toit, et donc de réduire fortement les coûts correspondants.

Encore un autre objectif de l'invention est, au moins dans un mode de réalisation particulier, de fournir une telle technique, permettant un remplacement d'une vitre fixe montée dans une baie de véhicule par un dispositif d'obturation selon l'invention, sans adaptation particulière sur la baie et plus généralement sur le véhicule.

### 4. Exposé de l'invention

Ces objectifs, ainsi que d'autres qui apparaîtront plus clairement par la suite, sont atteints selon l'invention à l'aide d'un dispositif d'obturation d'une baie ménagée dans un véhicule automobile, comprenant une partie fixe destinée à être solidarisée audit véhicule et au moins un panneau vitré mobile, apte à se déplacer selon un axe de coulissement sensiblement horizontal entre une position d'obturation, dans laquelle il obture une ouverture définie dans ladite partie fixe et au moins une position d'ouverture, dans laquelle ladite ouverture est au moins partiellement libérée.

Selon l'invention, un tel dispositif d'obturation comprend au moins un câble solidarisé audit panneau mobile, une portion dudit câble portant ledit panneau mobile et se déplaçant parallèlement audit axe de coulissement pour déplacer ledit panneau mobile, et ledit câble coopère avec des moyens de décalage aptes à faire passer ledit panneau mobile d'un plan d'obturation, correspondant au plan de ladite partie fixe, à un plan de coulissement, parallèle audit plan d'obturation.

Ainsi, on s'affranchit, de façon simple et efficace, de l'utilisation de rails pour à la fois porter et guider le panneau vitré mobile dans ses déplacements selon l'axe de coulissement et dans la direction perpendiculaire au plan d'obturation. Par ailleurs, le panneau vitré mobile peut être déplacé en agissant directement sur le câble.

Selon un aspect particulier de l'invention, ledit axe de coulissement est sensiblement horizontal.

Dans un mode de réalisation de l'invention, un tel dispositif d'obturation peut notamment constituer un pavillon vitré du véhicule

Selon un mode de réalisation préférentiel de l'invention, lesdits moyens de décalage comprennent au moins élément formant navette présentant au moins une lumière de guidage collaborant avec au moins un doigt faisant saillie dudit panneau mobile pour assurer ledit décalage.

Ainsi, on peut aisément faire coulisser le panneau dans un sens de coulissement ou dans un sens inverse.

Selon une approche préférentielle, ladite lumière présente une portion inclinée.

Ainsi, on peut déporter le panneau mobile du plan d'obturation au plan de coulissement dans un mouvement de louvoiement, ce qui est esthétique.

De façon avantageuse, ladite portion inclinée débouche dans une portion longitudinale de verrouillage.

Ainsi on peut verrouiller le panneau vitré mobile dans la position d'obturation.

Selon un aspect préféré, ledit câble définit sensiblement une boucle, et ledit élément formant navette forme une portion complémentaire de ladite boucle. Ainsi on peut déplacer le panneau vitré mobile, via l'élément formant navette, en tirant ou poussant un brin du câble.

Avantageusement, un dispositif d'obturation tel que décrit ci-dessus comprend des moyens d'écartement dudit câble par rapport audit élément formant navette.

Ainsi, le câble n'interfère pas avec l'élément formant navette.

Dans un mode de réalisation particulier de l'invention, les moyens d'écartement peuvent comprendre un tendeur.

Avantageusement, ledit câble est solidarisé avec un premier et un second bord latéral dudit panneau mobile.

Ainsi, le panneau mobile est soutenu efficacement de chaque côté.

De façon avantageuse, un dispositif d'obturation tel qu'un de ceux décrits ci-dessus comprend des moyens d'équilibrage et/ou de réglage de la tension du câble sur lesdits bords dudit panneau mobile.

Ainsi, on empêche le panneau mobile de se placer de travers, ce qui permet donc de garantir que l'ouverture peut être obturée de façon satisfaisante. D'autre part, on simplifie les opérations de montage et de maintenance sur le véhicule, en prévoyant des moyens de réglage de la tension du câble.

Selon un aspect particulier de l'invention, ledit câble formant sensiblement une boucle, et deux portions dudit câble se chevauchent en se croisant.

Ainsi, on synchronise le déplacement des éléments formant navette.

De façon préférée, ledit câble est tendu entre au moins quatre poulies folles montées chacune sur un axe fixé audit véhicule, de façon à former un «U» autour de la trajectoire dudit panneau mobile.

Ainsi, le câble est convenablement tendu sur son parcours, et on optimise le clair de baie.

Selon un mode de réalisation avantageux de l'invention, un tel dispositif d'obturation comprend des moyens d'entraînement dudit câble appartenant au groupe comprenant au moins :
- poulie montée sur l'arbre d'un moto-réducteur ;
- rouleaux actionnés par une crémaillère ;
- moyens d'entraînement par friction.

Préférentiellement, ledit câble coopère avec au moins un amortisseur, et au moins une portion dudit câble est introduite dans une gaine plastique fixe.

Ainsi, on peut ajuster le parcours du câble, et fluidifier le mouvement du câble, sans générer de nuisances sonores supplémentaires.

L'invention concerne également un véhicule automobile équipé d'un des dispositifs d'obturation tels que décrits ci-dessus.

### 5. Liste des figures

D'autres caractéristiques et avantages de l'invention apparaîtront plus clairement à la lecture de la description suivante d'un mode de réalisation particulier de l'invention, donnée à titre de simple exemple illustratif et non limitatif, et des dessins annexés, parmi lesquels :
- la figure 1 illustre un mode de réalisation d'un dispositif d'obturation selon l'invention formant un pavillon d'un véhicule ;
- la figure 2 est une vue de détail en perspective du panneau vitré mobile porté par un câble faisant partie du dispositif présenté sur la figure 1 ;
- la figure 3 illustre la fixation du câble avec une navette du dispositif d'obturation présenté à la figure 1 ;
- les figures 4A à 4D illustrent des étapes successives du mouvement de la navette représenté sur la figure 3 et d'un doigt faisant saillie du panneau mobile par rapport à une lumière formée dans la navette, lors de la libération à partir de la position d'obturation (figure 4A : en position d'obturation ; figure 4B dans une position déverrouillée ; figure 4C : dans une position de dégagement ; figure 4D dans une position d'ouverture) ;
- la figure 5 est une vue de détail des pattes d'arrêt d'une gaine de maintien du câble présenté en référence à la figure 3 permettant de maintenir ce câble sur la traverse avant du toit du véhicule.

### 6. Description détaillée d'un mode de réalisation de l'invention

### 6.1. Rappel du principe de l'invention

Le dispositif d'obturation selon l'invention est prévu pour équiper un véhicule. Il est destiné à être rapporté sur une baie réalisée dans la carrosserie du véhicule. Une telle baie peut notamment être réalisée sur le pavillon du véhicule, sur une paroi latérale, ...

Le principe général de l'invention repose donc sur la mise en oeuvre d'un câble tendu pour tout à la fois supporter, déplacer et guider un panneau vitré mobile fermant ou libérant une ouverture prévue dans le dispositif d'obturation.

Dans au moins un mode de réalisation de l'invention, cette nouvelle approche permet de faire affleurer la face tournée vers l'extérieur du panneau vitré avec un élément de châssis de la carrosserie et/ou avec un panneau vitré fixe du dispositif d'obturation, vu de l'extérieur du véhicule.

### 6.2. Exemple de mode de réalisation de l'invention

Par la suite, on considère un pavillon de véhicule formé par un dispositif d'obturation selon l'invention rapporté sur la carrosserie du véhicule.

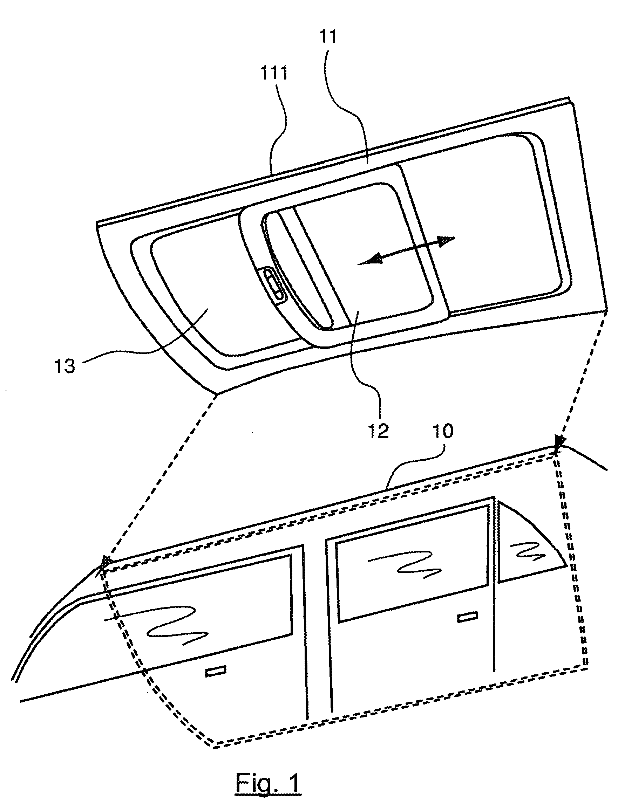

La figure 1 illustre dans une vue en perspective de dessous un mode de réalisation particulier de l'invention pour lequel le contour extérieur 111 de la partie fixe 11 du dispositif d'obturation selon l'invention est solidarisé par collage, de manière affleurante, sur une bordure de réception 10 du châssis du véhicule.

La partie fixe 11 est en verre trempé. Elle est avantageusement galbée pour donner au pavillon une forme répondant aux critères actuels en termes de design, de confort ou de pénétration dans l'air...

Un panneau vitré mobile 12 en polycarbonate thermoformé, représenté sur la figure 1 en position d'ouverture partielle, permet de fermer une ouverture 13 formée dans la partie fixe 11.

Ce panneau mobile 12 peut coulisser, à l'intérieur du véhicule, par rapport à la partie fixe 11 selon la direction de coulissement sensiblement horizontale, pour venir obturer ou libérer l'ouverture 13. Lors de la fermeture de l'ouverture, le panneau mobile est déplacé successivement par rapport à la partie fixe :
- dans le plan de coulissement, parallèle au plan formé par la partie fixe, à partir de la position représentée sur la figure 1, où l'ouverture est partiellement libérée, vers une position de dégagement dans laquelle le panneau mobile se trouve sensiblement en regard de l'ouverture et est décalé par rapport à la partie fixe ; et
- suivant un mouvement de louvoiement selon une courbe montante pour permettre le passage du panneau mobile de la position de dégagement à une position d'obturation, dans laquelle le panneau mobile se trouve dans le même plan que la partie fixe, encore appelé plan d'obturation, et obture l'ouverture.

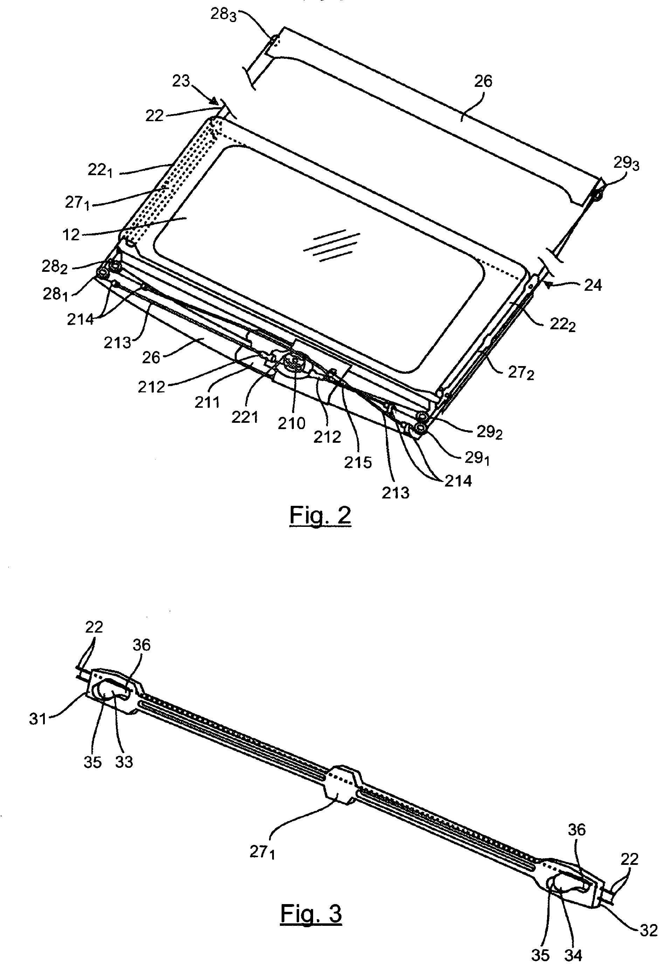

Comme on peut le voir plus clairement sur la figure 2 dans une vue de détail de la figure 1, pour laquelle la partie fixe du dispositif illustré sur la figure 1 n'a volontairement pas été représentée, le panneau mobile 12 est supporté sur ses bords latéraux 22₁, 22₂ par un câble polytoron 22 disposé en « U » autour de la trajectoire du panneau mobile 12, dont les portions 23, 24 sont tendues entre les traverses avant 25 et arrière 26 du toit du véhicule.

Ce câble 22 forme sensiblement une boucle complétée par deux éléments formant navette 27₁ et 27₂, auxquelles il est fixé. La fixation du câble 22 par des crochets 31, 32 prévus aux extrémités de l'élément formant navette 27₁ est précisée sur la figure 3.

Les bords latéraux 22₁, 22₂ sont, dans ce mode de réalisation de l'invention, solidarisés au câble 22 par l'intermédiaire des éléments formant navette 27₁ et 27₂.

Le câble 22 est tendu entre les traverses 25 et 26 à l'aide de deux triplets de poulies folles, 28₁, 28₂, 28₃, 29₁, 29₂, 29₃ disposées symétriquement par rapport à l'axe longitudinal du pavillon.

Un brin 221 du câble 22 est entraîné par friction sur une poulie 210 montée sur l'axe d'un moto-réducteur 211 fixé sur la traverse avant 25 et peut ainsi glisser vers une extrémité ou l'autre de cette traverse 25. Une cellule photovoltaïque (non représentée) est fixée sur la partie fixe au voisinage de la traverse arrière 26 pour permet d'alimenter en énergie de façon autonome le moto-réducteur 211 commandant le déplacement du câble.

Le moto-réducteur 211 permet ainsi de mettre en mouvement le panneau mobile en déplaçant les portions 23, 24 de la boucle parallèlement à l'axe de coulissement de ce panneau.

De chaque côté de cette poulie 210, le brin de câble 221 est solidaire d'amortisseurs 212 permettant de fluidifier le mouvement du câble et de réduire les nuisances sonores.

À chaque extrémité de la traverse avant 25, la poulie folle de renvoi d'angle 28₁, respectivement 29₂, d'axe vertical perpendiculaire au plan de la traverse avant 25, permet de faire cheminer le câble le long des contours latéraux de la bordure de réception 10 jusqu'à la poulie folle 28₃, 29₃, montée sur la traverse arrière 26 autour d'un axe horizontal.

À la sortie de la poulie 28₃, respectivement 29₃, le câble est renvoyé en sens inverse jusqu'à la poulie de renvoi d'angle 28₂, respectivement 29₁ montée à un extrémité de la traverse avant, autour d'un axe vertical. On notera que ces poulies 28₂, 29₁ sont disposées dans un plan inférieur à celui des poulies de façon à empêcher que les portions de retour du câble 22 interfèrent avec les éléments formant navette 27₁ et 27₂.

La portion du câble 22 reliant la poulie 29₁ à la poulie 28₂ croise le brin 221 reliant la poulie 28₁ à la poulie 29₂, en le chevauchant, pour permettre un déplacement des portions de boucle 23, 24 dans le même sens.

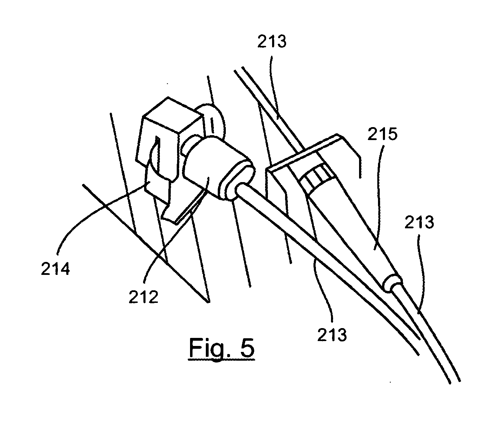

Le câble 22 est maintenu et guidé sur la traverse avant 25 par une gaine semi-rigide fixe 213 dans lequel il est introduit, dont les extrémités sont fixées à la traverse 25 par deux pattes d'arrêt 214, représentées dans une vue de détail sur la figure 5.

Des moyens de réglage 215 de la tension du câble, permettant de le maintenir tendu en permanence, sont disposés aux extrémités des gaines 213.

Ces moyens de réglage 215 permettre par ailleurs d'assurer un équilibrage de la tension du câble dans les portions 23, 24 et donc de déplacer symétriquement les éléments formant navette 27₁ et 27₂ entraînant le panneau vitré mobile 12. Ainsi, on évite que le panneau mobile 12 adopte une position en travers.

Chaque élément formant navette 27₁ ou 27₂ présente, comme on peut le voir sur la figure 3, deux lumières de guidage 33, 34 accueillant chacune un doigt faisant saillie transversalement du panneau mobile 22. Chaque lumière 33, 34 présente une portion inclinée 35 permettant d'assurer le décalage du panneau mobile 12 du plan d'obturation à un plan de coulissement, parallèle au plan d'obturation. Dans ce mode de réalisation particulier de l'invention, la hauteur de chaque portion inclinée est au minimum de quelques millimètres. Dans une variante de ce mode de réalisation, il peut être envisagé que la hauteur de chaque portion inclinée soit sensiblement égale à huit centimètres.

Ces portions inclinées 35 débouchent dans une portion longitudinale de verrouillage 36 du panneau mobile dans la position d'obturation.

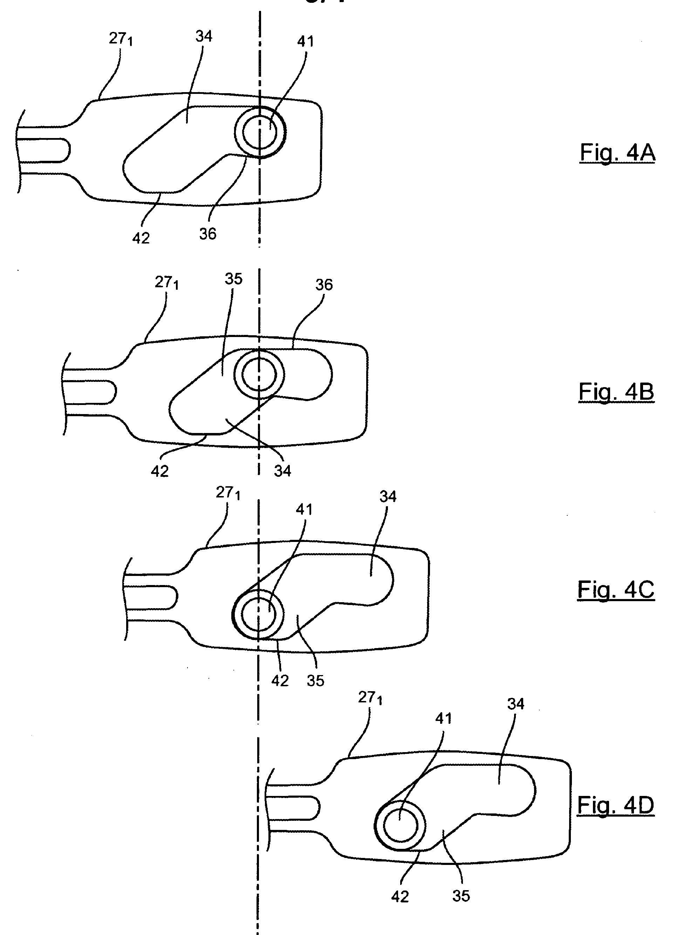

Les figures 4A à 4D détaillent le mouvement de l'élément formant navette 27₁ (ou 27₂) et du panneau mobile lors de la libération à partir de la position d'obturation.

Sur la figure 4A le panneau vitré mobile 12 est en position d'obturation. Le doigt 41 faisant saillie du panneau mobile 12 est en appui sur le fond de la portion de verrouillage 36.

Lorsque le moto-réducteur entraîne le câble 22 et l'élément formant navette vers la droite, la portion de verrouillage 36 glisse le long du doigt 41, jusqu'à ce que le doigt 41 resté fixe occupe une position déverrouillée, telle que représentée sur la figure 4B.

À partir de la position déverrouillée, le panneau vitré mobile se dégage de l'ouverture, lorsque l'élément formant navette est de nouveau entraînée vers la droite. Il louvoie ainsi vers le bas, le doigt 41 étant guidé dans la portion inclinée 35, jusqu'à une position de dégagement, illustrée par la figure 4C, au-dessous du plan d'obturation. Dans cette position de dégagement, le doigt 41 est en butée sur le fond de la portion inclinée 35.

À partir de cette position de dégagement, le déplacement de la navette vers la droite entraîne le coulissement du panneau vitré mobile 12 vers la droite, parallèlement au plan de la partie fixe dans une position d'ouverture, telle qu'illustrée par exemple par la figure 4D, en libérant progressivement l'ouverture 13.

L'ouverture 13 peut ensuite être obturée en inversant le sens d'entraînement du câble et les éléments formant navette, c'est-à-dire les entraînant vers la gauche, ce qui permet faire coulisser progressivement le panneau vitré mobile jusqu'à la position de dégagement et de décaler le panneau vitré mobile vers le haut jusqu'à la position d'obturation, comme on peut le comprendre aisément. Dans ce mouvement des éléments formant navette vers la gauche, les lumières 33 et 34 coulissent le long de chaque doigt 41, maintenu initialement en contact avec une surface longitudinale inférieure d'amorçage 42 puis guidé vers le haut par la portion inclinée 35, avant de pénétrer dans la portion de verrouillage 36.

### 6.3. Autres caractéristiques et avantages de l'invention

D'autres variantes du mode de réalisation de l'invention décrit ci-dessus peuvent être envisagées parmi lesquelles :
- le câble peut être actionné par des rouleaux actionnés par une crémaillère ou des moyens d'entraînement par friction ;
- le câble peut être écarté des éléments formant navette par un tendeur.

Dans un mode de réalisation complémentaire du mode de réalisation présenté ci-dessus, il peut également être prévu plus de deux lumières pour recevoir un nombre de doigts faisant saillie du panneau vitré mobile correspondant.

Dans encore une autre variante de l'invention, le dispositif d'obturation selon l'invention peut être prévu pour obturer une baie sensiblement verticale du véhicule, par exemple formée dans une paroi latérale d'un véhicule. Il convient de noter que dans une telle variante, il peut être utile de limiter les dimensions et/ou la masse du panneau vitré mobile, afin d'éviter que le câble fléchisse sous le poids du panneau vitré mobile.

## Revendications

1. Dispositif d'obturation d'une baie ménagée dans un véhicule automobile, comprenant une partie fixe destinée à être solidarisée audit véhicule et au moins un panneau vitré mobile, apte à se déplacer selon un axe de coulissement entre une position d'obturation, dans laquelle il obture une ouverture définie dans ladite partie fixe, et au moins une position d'ouverture, dans laquelle ladite ouverture est au moins partiellement libérée,
comprenant au moins un câble solidarisé audit panneau mobile,
ledit câble coopèrant avec des moyens de décalage aptes à faire passer ledit panneau mobile d'un plan d'obturation, correspondant au plan de ladite partie fixe, à un plan de coulissement, parallèle audit plan d'obturation, **caractérisé en ce que** une portion dudit câble portant ledit panneau mobile et se déplaçant parallèlement audit axe de coulissement pour déplacer ledit panneau mobile.

2. Dispositif d'obturation selon la revendication 1, **caractérisé en ce que** ledit axe de coulissement est sensiblement horizontal.

3. Dispositif d'obturation selon l'une quelconque des revendications 1 et 2, **caractérisé en ce que** lesdits moyens de décalage comprennent au moins élément formant navette présentant au moins une lumière de guidage collaborant avec au moins un doigt faisant saillie dudit panneau mobile pour assurer ledit décalage.

4. Dispositif d'obturation selon la revendication 3, **caractérisé en ce que** ladite lumière présente une portion inclinée.

5. Dispositif d'obturation selon la revendication 4, **caractérisé en ce que** ladite portion inclinée débouche dans une portion longitudinale de verrouillage.

6. Dispositif d'obturation selon l'une quelconque des revendications 3 à 5, **caractérisé en ce que** ledit câble définit sensiblement une boucle, et **en ce que** ledit élément formant navette forme une portion complémentaire de ladite boucle.

7. Dispositif d'obturation selon la revendication 6, **caractérisé en ce qu'**il comprend des moyens d'écartement dudit câble par rapport audit élément formant navette.

8. Dispositif d'obturation selon l'une quelconque des revendications 1 à 7, **caractérisé en ce que** ledit câble est solidarisé avec un premier et un second bord latéral dudit panneau mobile.

9. Dispositif d'obturation selon la revendication 8, **caractérisé en ce qu'**il comprend des moyens d'équilibrage et/ou de réglage de la tension du câble sur lesdits bords dudit panneau mobile.

10. Dispositif d'obturation selon l'une quelconque des revendications 8 et 9, **caractérisé en ce que** ledit câble formant sensiblement une boucle, et **en ce que** deux portions dudit câble se chevauchent en se croisant.

11. Dispositif d'obturation la revendication 10, **caractérisé en ce que** ledit câble est tendu entre au moins quatre poulies folles montées chacune sur un axe fixé audit véhicule, de façon à former un «U» autour de la trajectoire dudit panneau mobile.

12. Dispositif selon l'une quelconque des revendication 1 à 11, **caractérisé en ce qu'**il comprend des moyens d'entraînement dudit câble appartenant au groupe comprenant au moins :
- poulie montée sur l'arbre d'un moto-réducteur ;
- rouleaux actionnés par une crémaillère ;
- moyens d'entraînement par friction.

13. Dispositif d'obturation selon l'une quelconque des revendications 1 à 12, **caractérisé en ce que** ledit câble coopère avec au moins un amortisseur, et **en ce qu'**au moins une portion dudit câble est introduite dans une gaine plastique fixe.

14. Véhicule automobile comprenant au moins une baie ménagée dans sa carrosserie, **caractérisé en ce qu'**il comprend au moins un dispositif d'obturation selon la revendication 1, fixé de façon affleurante à ladite carrosserie pour obturer ladite baie.

## Claims

1. Device for closing an opening provided in a motor vehicle, said device comprising a fixed part, which is intended to be fastened to the said vehicle, and at least one movable glazed panel which is capable of moving along an axis of sliding between a closing position, in which it closes an aperture defined within the said fixed part, and at least one opening position, in which the said aperture is at least partially unblocked;
comprising at least one cable fastened to the said movable panel;
the said cable cooperating with offsetting means which are capable of causing the said movable panel to pass from a closing plane, which corresponds to the plane of the said fixed part, to a plane of sliding which is parallel to the said closing plane;
**characterised in that** a portion of the said cable carries the said movable panel and moves parallel to the said axis of sliding so as to move the said movable panel.

2. Closing device according to claim 1, **characterised in that** the said axis of sliding is substantially horizontal.

3. Closing device according to either of claims 1 or 2, **characterised in that** the said offsetting means comprise at least an element forming a shuttle having at least one guide opening collaborating with at least one finger projecting from the said movable panel in order to carry out the said offsetting operation.

4. Closing device according to claim 3, **characterised in that** the said opening has an inclined portion.

5. Closing device according to claim 4, **characterised in that** the said inclined portion runs into a longitudinal locking portion.

6. Closing device according to any of claims 3 to 5, **characterised in that** the said cable substantially defines a loop, and **in that** the said element forming a shuttle forms a complementary portion of the said loop.

7. Closing device according to claim 6, **characterised in that** it comprises means for spacing the said cable apart in relation to the said element forming a shuttle.

8. Closing device according to any of claims 1 to 7, **characterised in that** the said cable is fastened to a first and a second lateral edge of the said movable panel.

9. Closing device according to claim 8, **characterised in that** it comprises means for balancing and/or adjusting the tension of the cable on the said edges of the said movable panel.

10. Closing device according to either of claims 8 or 9, **characterised in that** the said cable substantially forms a loop, and **in that** two portions of the said cable overlap as they cross one another.

11. Closing device according to claim 10, **characterised in that** the said cable is stretched between at least four loose pulleys, each mounted on a pin fixed to the said vehicle, so as to form a "U" around the path of the said movable panel.

12. Closing device according to any of claims 1 to 11, **characterised in that** it comprises means for driving the said cable which belong to the group comprising at least:
- a pulley mounted on the shaft of a geared motor;
- rollers activated by a rack;
- friction-type driving means.

13. Closing device according to any of claims 1 to 12, **characterised in that** the said cable cooperates with at least one damper, and **in that** at least one portion of the said cable is inserted in a fixed plastic sheath.

14. Motor vehicle comprising at least one opening provided in its body, **characterised in that** it comprises at least one closing device according to claim 1, which is fixed in a flush manner to the said body in order to close the said opening.

## Patentansprüche

1. Vorrichtung zum Verschließen eines in einem Kraftfahrzeug gebildeten Fensters, umfassend einen festen Teil, der mit dem Kraftfahrzeug verbindbar ist und mindestens eine bewegliche Glasscheibe, die in einer Schiebeachse zwischen einer Schließstellung, in der sie eine Öffnung in dem festen Teil verschließt und mindestens einer Öffnungsstellung, in der die Öffnung zumindest teilweise freigegeben ist, verschiebbar ist, umfassend mindestens ein Kabel, das mit der beweglichen Glasscheibe verbunden ist, wobei das Kabel mit Verschiebemitteln zusammenwirkt, die die bewegliche Glasscheibe von einer Schließebene, die der Ebene des festen Teils entspricht, in eine Gleitebene, die parallel zu der Schließebene ist, überführen können, **dadurch gekennzeichnet, dass** ein Teil des Kabels die bewegliche Glasscheibe trägt und parallel zur Schiebeachse verlagerbar ist, um die bewegliche Glasscheibe zu verlagern.

2. Vorrichtung zum Verschließen gemäß Anspruch 1, **dadurch gekennzeichnet, dass** die Schiebeachse im Wesentlichen horizontal verläuft.

3. Vorrichtung zum Verschließen gemäß einem der Ansprüche 1 bis 2, **dadurch gekennzeichnet, dass** die Verschiebmittel mindestens ein Element umfassen, das verschiebbar ist und das mindestens eine Führöffnung aufweist, die mit mindestens einem Finger, der aus der beweglichen Glasscheibe herausragt, zusammenwirkt, um die Verschiebung zu erreichen.

4. Vorrichtung zum Verschließen gemäß Anspruch 3, **dadurch gekennzeichnet, dass** die Öffnung einen geneigten Teilbereich aufweist.

5. Vorrichtung zum Verschließen gemäß Anspruch 4, **dadurch gekennzeichnet, dass** der geneigte Teilbereich in einen Längsbereich übergeht, der eine Verriegelungsfunktion aufweist.

6. Vorrichtung zum Verschließen gemäß einem der Ansprüche 3 bis 5, **dadurch gekennzeichnet, dass** das Kabel im Wesentlichen eine Schleife beschreibt und dass das verschiebbare Element einen komplementären Teil der Schleife bildet.

7. Vorrichtung zum Verschließen gemäß Anspruch 6, **dadurch gekennzeichnet, dass** sie Mittel zum Beabstanden des Kabels von dem verschiebbaren Element aufweist.

8. Vorrichtung zum Verschließen gemäß einem der Ansprüche 1 bis 7, **dadurch gekennzeichnet, dass** das Kabel mit einem ersten und einem zweiten Rand der beweglichen Glasscheibe verbunden ist.

9. Vorrichtung zum Verschließen gemäß Anspruch 8, **dadurch gekennzeichnet, dass** sie Mittel zum Ausrichten und/oder Regeln der Spannung des Kabels an den Rändern der beweglichen Glasscheibe umfasst.

10. Vorrichtung zum Verschließen gemäß einem der Ansprüche 8 bis 9, **dadurch gekennzeichnet, dass** das Kabel im Wesentlichen eine Schleife bildet und daß zwei Teilbereiche des Kabels sich kreuzend überlappen.

11. Vorrichtung zum Verschließen gemäß Anspruch 10, **dadurch gekennzeichnet, dass** das Kabel zwischen mindestens vier freilaufenden Rollen gespannt ist, die jeweils auf einer Achse, die an dem Kraftfahrzeug befestigt ist, befestigt sind, so dass sie ein "U" um die Bewegungsebene der beweglichen Glasscheibe bilden.

12. Vorrichtung zum Verschließen gemäß einem der Ansprüche 1 bis 11, **dadurch gekennzeichnet, dass** sie Antriebsmittel für das Kabel umfasst, die zur Gruppe gehören, welche zumindest
• eine Rolle, die auf der Welle einer Motor-Getriebeeinheit angeordnet ist,
• Rollen, die durch eine Zahnstange angetrieben werden,
• Reibantriebsmittel
umfasst.

13. Vorrichtung zum Verschließen gemäß einem der Ansprüche 1 bis 12, **dadurch gekennzeichnet, dass** das Kabel mit mindestens einem Stoßdämpfer zusammenwirkt und daß mindestens ein Teilbereich des Kabels in eine fest angeordnete Kunststoffhülle eingeführt ist.

14. Kraftfahrzeug, umfassend wenigstens ein in seiner Karosserie angeordnetes Fenster, **dadurch gekennzeichnet, dass** es mindestens eine Vorrichtung zum Verschließen gemäß Anspruch 1 umfasst, die an der Karosserie anliegend befestigt ist, um das Fenster zu verschließen.
